# EUROPÄISCHE PATENTANMELDUNG

(11) **EP 4 726 302 A1**
(43) Veröffentlichungstag der Anmeldung: **15.04.2026**
(21) Anmeldenummer: 25192223.3
(22) Anmeldetag: 28.07.2025
(51) Int. Cl.: F25D 23/06

(54) **GEHÄUSE FÜR EINEN KLIMASCHRANK SOWIE KLIMASCHRANK**

(30) Priorität: 14.10.2024 DE 102024129716
(71) Anmelder: Binder GmbH, 78532 Tuttlingen (DE)
(72) Erfinder: Arabul, Ahmet, 78532 Tuttlingen (DE); BUSCHLE, Jochen, 78532 Nendingen (DE); Storz, Ewald, 78604 Rietheim-Weilheim (DE)
(74) Vertreter: Westphal, Mussgnug & Partner Patentanwälte mbB

(57) **Zusammenfassung**

Die Erfindung betrifft ein Gehäuse (10) für einen Klimaschrank umfassend einen Schaumkörper (12) mit
• einem Innenraum (13) zur Aufnahme eines Klimaraumeinsatzes,
• einer Außenwand (16)
• einer gedachten, senkrecht auf der Außenwand (16) stehenden Außenwandnormalen (18), und
• einen in einer Normalenrichtung (20) der Außenwandnormalen (18) über die Außenwand (16) vorstehenden Vorsprung (22),

wobei das Gehäuse (10) einen um die Außenwand (16) zumindest abschnittsweise umlaufenden Außenwandrand (30) aufweist, der in der Normalenrichtung (20) derart über die Außenwand (16) überstehend angeordnet ist, dass der Außenwandrand (30) und die Außenwand (16) eine Außenwandkavität (32) ausbilden, und wobei der Vorsprung (22) derart an der Außenwand (16) angeordnet ist, dass der Vorsprung (22) die Außenwandkavität (32) in eine erste Kavität (34) und eine zweite Kavität (36) unterteilt,
sowie einen Klimaschrank mit einem Gehäuse (10).

## Beschreibung

Die Erfindung betrifft ein Gehäuse für einen Klimaschrank sowie einen Klimaschrank.

Im Innenraum eines Klimaschranks lassen sich bestimmte klimatische Bedingungen einstellen. Klimaschränke kommen daher in vielen Bereichen, insbesondere der Naturwissenschaft und Technik, zum Einsatz, beispielsweise um Produkte oder Proben unter vorgegebenen klimatischen Bedingungen untersuchen zu können.

Zum Wärmetransport kommen in derartigen Klimaschränken bislang häufig fluorierte Kältemittel, wie beispielsweise das Kältemittel R134a, zum Einsatz. Im Zuge der Entwicklung hin zu nachhaltigeren und umweltfreundlicheren Produkten werden derartige Kältemittel mehr und mehr durch natürliche Kältemittel ersetzt. Im Gegensatz zu den bislang verwendeten Kältemitteln sind viele der natürlichen Kältemittel jedoch leicht entzündlich.

Es besteht daher das Bestreben, insbesondere die kältemittelführenden Leitungen und Komponenten innerhalb des Klimaschranks abzuschotten, bei denen eine erhöhte Wahrscheinlichkeit eines Austritts von Kältemittel besteht, wie beispielsweise Sicherheitsventilen.

Zur Minimierung der Brandgefahr an Kühlgeräten ist es aus dem Stand der Technik bereits bekannt, an den Geräten vorhandene Wärmequellen möglichst von den übrigen Baugruppen zu isolieren. So schlägt die DE 10 2019 216 094 A1 beispielsweise eine Anordnung vor, bei der der Maschinenraum durch eine Maschinenraumdeckwandung begrenzt wird und zwischen der Maschinenraumdeckwandung und den Seitenwandbauteilen eine Dichtung angeordnet ist. Eine derartige Separierung ist jedoch mit einem hohen Fertigungs- und Montageaufwand verbunden.

Aus der CN 111 365 771 A ist es bekannt, die kühlmittelführenden Leitungen einzuschäumen. Damit sind die Leitungen jedoch nicht mehr für Wartungs- oder Reparaturarbeiten zugänglich. Für die Abschottung möglicherweise kältemittelabgebender Komponenten, wie beispielsweise Sicherheitsventilen, ist eine derartige Anordnung ebenfalls nicht praktikabel.

Der Erfindung liegt die Aufgabe zugrunde, eine Anordnung bereitzustellen, die eine Abschottung kältemittelführender und/oder -abgebender Komponenten in einem Klimaschrank ermöglicht und dabei kostengünstig herstellbar ist.

Die Aufgabe wird erfindungsgemäß gelöst durch ein Gehäuse für einen Klimaschrank mit den Merkmalen des Patentanspruchs 1 sowie durch einen Klimaschrank mit den Merkmalen des Patentanspruchs 15.

Vorteilhafte Ausgestaltungen und Weiterbildungen der Erfindung sind in den abhängigen Ansprüchen angegeben.

Ein erfindungsgemäßes Gehäuse für einen Klimaschrank umfasst einen Schaumkörper mit einem Innenraum zur Aufnahme eines Klimaraumeinsatzes, eine Außenwand, eine gedachte, senkrecht auf der Außenwand stehenden Außenwandnormale, und einen in einer Normalenrichtung der Außenwandnormalen über die Außenwand vorstehenden Vorsprung. Sofern nicht anders angegeben handelt es sich hier und im Folgenden bei der Normalenrichtung um die von dem Innenraum weg weisende Richtung der Außenwandnormalen. Der Innenraum weist vorzugsweise eine an einer Vorderseite des Gehäuses angeordnete Innenraumöffnung auf. Die Außenwand ist vorzugsweise als eine der Innenraumöffnung gegenüberliegend angeordnete Rückwand des Schaumkörpers ausgebildet.

Das Gehäuse weist einen um die Außenwand zumindest abschnittsweise umlaufenden Außenwandrand auf, der in der Normalenrichtung derart über die Außenwand überstehend angeordnet ist, dass der Außenwandrand und die Außenwand eine Außenwandkavität ausbilden. Der Außenwandrand kann die Außenwand quer zu der Außenwandnormalen begrenzen. Vorzugsweise läuft der Außenwandrand vollständig um die Außenwand um, sodass der Außenwandrand geschlossen ist.

Der Vorsprung ist derart an der Außenwand angeordnet, dass der Vorsprung die Außenwandkavität in eine erste Kavität und eine zweite Kavität unterteilt. Vorzugsweise sind in der ersten Kavität kältemittelführende und/oder -abgebende Komponenten anordenbar. Der Vorsprung kann so die Abschottung der kältemittelführenden und/oder -abgebenden Komponenten ermöglichen, insbesondere von weiteren Komponenten des Klimaschranks, die vorzugsweise in der zweiten Kavität anordenbar sind.

Vorzugsweise ist der Schaumkörper aus einem gasdichten Schaum gefertigt. Der Begriff "gasdicht" bezieht sich hier und im Folgenden vorzugsweise auf gasförmiges Kältemittel. Damit kann ein Durchtritt von Kältemittel durch den Schaumkörper, insbesondere durch den Vorsprung, und damit von der ersten Kavität in die zweite Kavität vermieden werden. Bevorzugt ist der Schaum als geschlossenporiger Schaum ausgebildet. Der Schaum ist vorzugsweise als Kunststoffschaum, insbesondere als Polyurethanschaum, Ethylen-Propylen-Dien-Monomer-Schaum, Silikonschaum oder Neoprenschaum, ausgebildet.

In einer bevorzugten Ausführungsform der Erfindung ist der Schaumkörper als einteilig geschäumtes Bauteil ausgebildet. Der Schaumkörper kann damit in einem einzigen Schäumvorgang hergestellt werden. Zur Herstellung ist vorzugsweise nur eine Schäumform erforderlich. Damit kann der Schaumkörper besonders kostengünstig hergestellt werden. Außerdem kann so ein Schaumkörper mit einer unterbrechungsfreien Schaumstruktur hergestellt werden.

Vorzugsweise weist der Vorsprung ein erstes Vorsprungsende sowie ein zweites Vorsprungsende auf und ist als senkrecht zur Außenwandnormalen von dem ersten Vorsprungsende zu dem zweiten Vorsprungsende verlaufende Rippe ausgebildet, wobei das erste Vorsprungende und das zweite Vorsprungende jeweils anliegend an dem Außenwandrand angeordnet sind. Vorzugsweise sind das erste Vorsprungende und das zweite Vorsprungende jeweils gasdicht anliegend an dem Außenwandrand angeordnet. Das erste Vorsprungsende und das zweite Vorsprungsende können mittels einer gedachten, in der Rippe verlaufende Verbindungslinie verbunden sein. Die Verbindungslinie kann dabei einen beliebigen Linienverlauf aufweisen. Bevorzugt weist die Verbindungslinie einen L-förmigen Linienverlauf auf.

Die Außenwand kann eine rechteckige Grundfläche mit vier Außenwandkanten und der Außenwandrand kann mehrere Randabschnitte aufweisen, wobei entlang jeder der Außenwandkanten einer der Randabschnitte angeordnet sein kann. Die einzelnen Randabschnitte sind vorzugsweise gasdicht aneinander angrenzend angeordnet.

Drei der Randabschnitte können durch den Schaumkörper gebildet sein. Vorzugsweise sind zwei einander gegenüberliegend angeordnete seitliche Randabschnitte sowie ein rechtwinklig zu den beiden seitlichen Randabschnitten angeordneter oberer Randabschnitt der Randabschnitte durch den Schaumkörper gebildet.

Das Gehäuse kann einen unter dem Schaumkörper angeordneten Unterbau aufweisen, wobei einer der Randabschnitte durch den Unterbau gebildet ist. Vorzugsweise ist ein dem oberen Randabschnitt gegenüberliegend angeordneter unterer Randabschnitt der Randabschnitte durch den Unterbau gebildet. In dem Unterbau kann ein Maschinenraum, insbesondere zur Aufnahme eines Kompressors des Klimaschranks, angeordnet sein.

Das erste Vorsprungsende kann anliegend an einen ersten Randabschnitt der Randabschnitte und das zweite Vorsprungsende kann anliegend an einen an den ersten Randabschnitt anliegenden zweiten Randabschnitt der Randabschnitte angeordnet sein. Vorzugsweise ist das erste Vorsprungsende anliegend an einen der seitlichen Randabschnitte angeordnet. Das zweite Vorsprungsende kann an anliegend an den unteren Randabschnitt angeordnet sein.

In einer bevorzugten Ausführungsform weist der Vorsprung eine von der Außenwand abgewandte Vorsprungstirnseite und der Außenwandrand eine von der Außenwand abgewandte Randstirnseite auf, wobei die Vorsprungstirnseite und die Randstirnseite in einer gemeinsamen, senkrecht zu der Außenwandnormalen angeordneten Ebene angeordnet sind. Dadurch kann die Herstellung des Schaumkörpers und/oder eine gemeinsame Abdichtung des Randstirnseite und der Vorsprungstirnseite erleichtert werden.

Das Gehäuse kann mindestens ein an dem Vorsprung und/oder dem Außenwandrand anliegendes Befestigungselement zum Befestigen eines Gehäusedeckels des Gehäuses angeordnet sein. Der Gehäusedeckel ist vorzugsweise gegenüber der Außenwand anordenbar und kann dort die Außenwandkavität verschließen. Vorzugsweise ist das mindestens eine Befestigungselement an der Vorsprungstirnseite bzw. der Randstirnseite angeordnet. Das mindestens eine Befestigungselement kann als flächiges Bauteil, insbesondere als Blechbauteil ausgebildet sein. Das mindestens eine Befestigungselement kann Befestigungsbohrungen aufweisen.

Bevorzugt ist der Gehäusedeckel dichtend an dem mindestens einen Befestigungselement und/oder dem Vorsprung anordenbar. Der Gehäusedeckel kann außerdem dichtend an dem Außenwandrand anliegen. Vorzugsweise ist damit kein Gasdurchtritt zwischen dem Gehäusedeckel und dem mindestens einen Befestigungselement und/oder dem Vorsprung bzw. dem Außenwandrand möglich. Besonders bevorzugt liegt der Gehäusedeckel dichtend an der Vorsprungstirnseite des Vorsprungs und/oder an der Randstirnseite an. Der Gehäusedeckel kann ein an dem mindestens einen Befestigungselement, dem Vorsprung und/oder dem Außenwandrand anliegendes Dichtelement aufweisen. Entsprechend können das mindestens eine Befestigungselement, der Vorsprung und/oder der Außenwandrand können ein an dem Gehäusedeckel anliegendes Dichtelement aufweisen. Das Dichtelement kann aus Moosgummi ausgebildet sein.

In einer Weiterbildung der Erfindung weist das Gehäuse ein in dem Vorsprung angeordnetes Strukturbauteil auf. Das Strukturbauteil kann in den Schaumkörper eingeschäumt sein. Dazu wird das Strukturbauteil vorzugsweise bei der Herstellung des Schaumkörpers vor dem Beginn des Schäumvorgangs in der Schäumform angeordnet. Das Strukturbauteil kann als massiver Festkörper ausgebildet sein. Das Strukturbauteil kann insbesondere als Metalleinleger ausgebildet sein. Eine Ausbildung als Kunststoffeinleger ist ebenfalls denkbar.

Das Strukturbauteil kann eine senkrecht zur Außenwandnormalen angeordnete Bauteilstirnseite und mindestens einen an der Bauteilstirnseite angeordneten zur Außenwand hin weisenden Bauteilschenkel aufweisen. Vorzugsweise ist die Bauteilstirnseite als ein Befestigungselement des mindestens einen Befestigungselements ausgebildet. Der mindestens eine Bauteilschenkel kann zur Verankerung des Strukturbauteils in dem Schaumkörper dienen. Der mindestens eine Bauteilschenkel kann als genau ein Bauteilschenkel ausgebildet sein. Der Bauteilschenkel kann derart an der Bauteilstirnseite angeordnet sein, dass das Strukturbauteil einen L- oder T-förmigen Querschnitt aufweist. Alternativ kann das Strukturbauteil zwei Bauteilschenkel des mindestens einen Bauteilschenkels aufweisen. In diesem Fall sind die beiden Bauteilschenkel vorzugsweise derart an der Bauteilstirnseite angeordnet, dass das Strukturbauteil einen U-förmigen Querschnitt aufweist.

In einer bevorzugten Ausführungsform der Erfindung weist der mindestens eine Bauteilschenkel eine Vielzahl an Durchbrüchen auf. Vorzugsweise ist der Schaumkörper in die Durchbrüche eingreifend angeordnet. Dadurch kann das Strukturbauteil besonders wirkungsvoll in dem Schaumkörper verankert sein. Vorzugsweise füllen sich die Durchbrüche bei der Herstellung des Schaumkörpers mit dem Schaum des Schaumkörpers. Die Durchbrüche können als kreisrunde Bohrungen ausgebildet sein.

Der mindestens eine Bauteilschenkel kann mindestens eine, vorzugsweise parallel zu der Bauteilstirnseite verlaufende, Biegung aufweisen. Die mindestens eine Biegung kann ebenfalls einer effektiven Verankerung des Strukturbauteils in dem Schaumkörper dienen.

Ein erfindungsgemäßer Klimaschrank umfasst ein Gehäuse nach einem der vorhergehenden Ansprüche. In der Außenwandkavität angeordnete kältemittelführende und/oder -abgebende Komponenten des Klimaschranks sind dabei vorzugsweise ausschließlich in der ersten Kavität angeordnet.

Ein Ausführungsbeispiel der Erfindung wird anhand der nachfolgenden Figuren erläutert. Es zeigt:
- Figur 1: eine perspektivische Ansicht eines Ausführungsbeispiels eines Gehäuses eines Klimaschranks,
- Figur 2: eine Rückansicht des in Fig. 1 gezeigten Gehäuses,
- Figur 3: eine perspektivische Ansicht des Schaumkörpers des in Fig. 1 gezeigten Ausführungsbeispiels,
- Figur 4: eine Rückansicht des in Fig. 3 gezeigten Schaumkörpers,
- Figur 5: die in Fig. 1 gezeigte Ansicht mit ausgeblendetem Schaumkörper,
- Figur 6: die in Fig. 2 gezeigte Ansicht mit ausgeblendetem Schaumkörper.

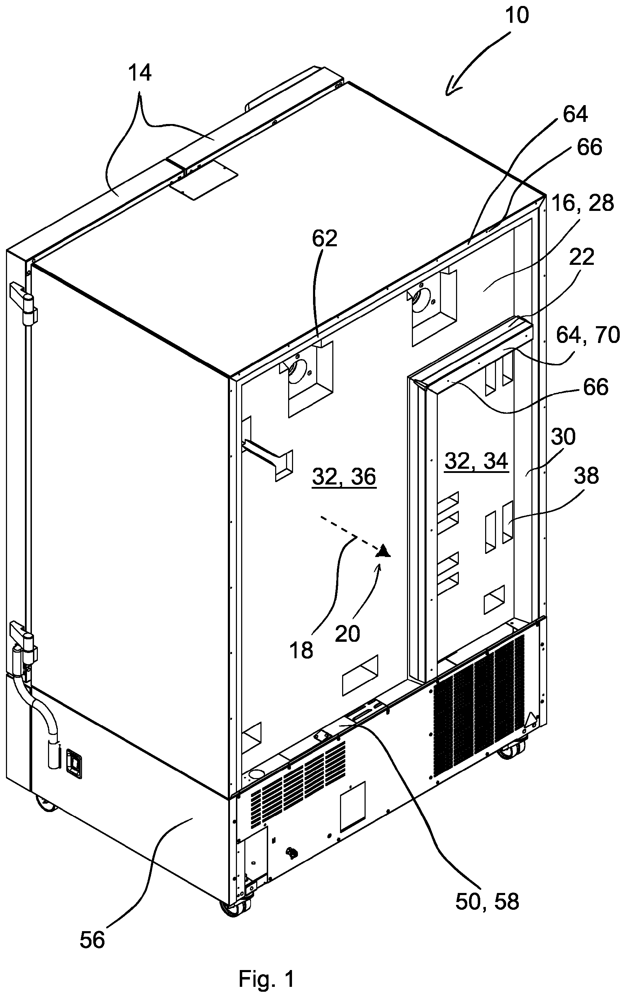

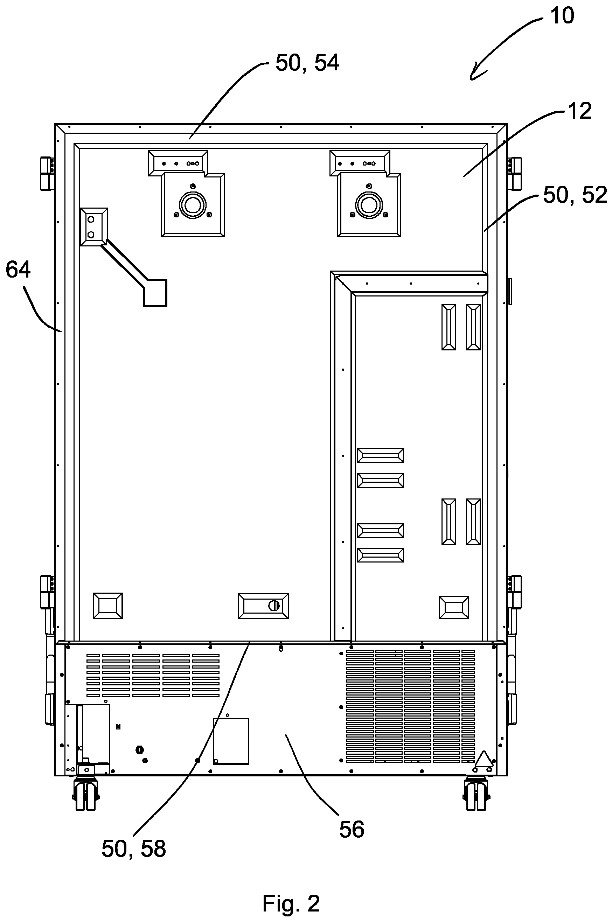

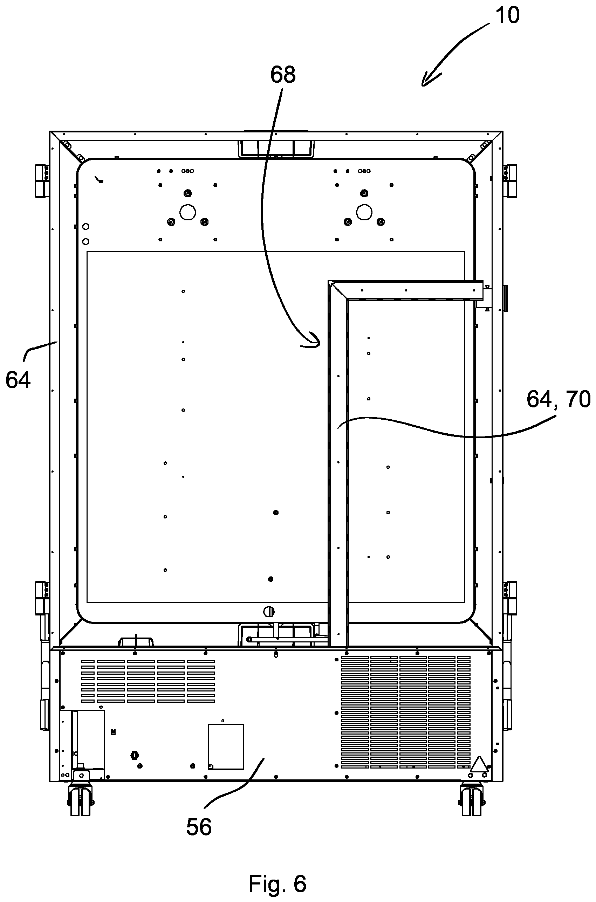

Die Figuren 1 bis 6 zeigen verschiedene Ansichten eines Ausführungsbeispiels. Der Übersichtlichkeit halber werden nicht alle Bezugszeichen in jeder Figur verwendet.

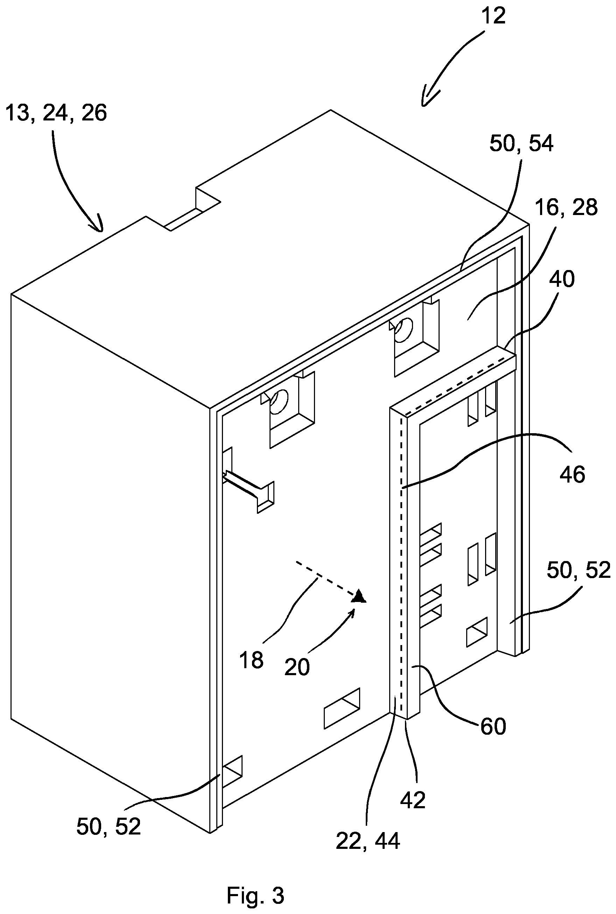

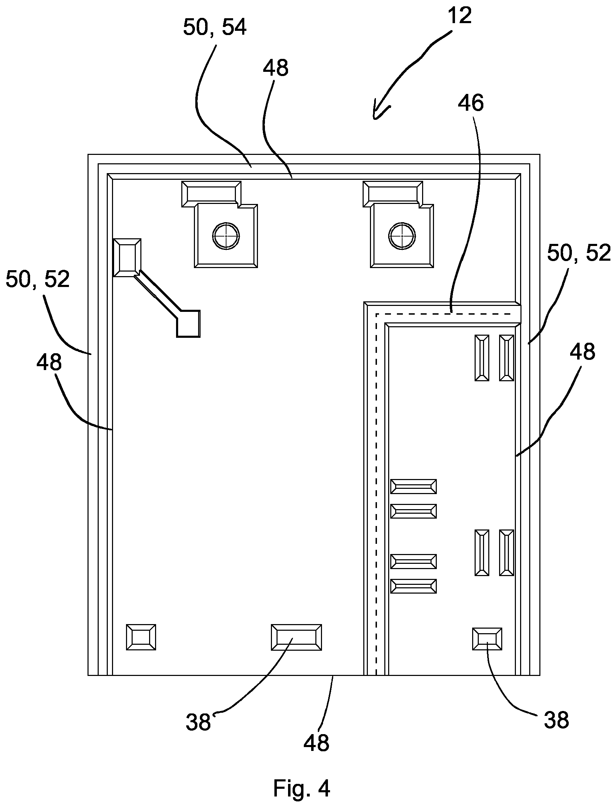

Die Fig. 1 u. 2 zeigen ein Ausführungsbeispiel eines Gehäuses 10 eines Klimaschranks. Das Gehäuse 10 umfasst einen Schaumkörper 12, der in den Fig. 3 und 4 separat dargestellt ist.

Der Schaumkörper 12 weist einen innenliegenden und in den Fig. 1 bis 6 nicht einsehbaren Innenraum 13 zur Aufnahme eines Klimaraumeinsatzes auf.

Wie die Fig. 3 weiter zeigt, weist der Schaumkörper 12 eine Außenwand 16, eine gedachte, senkrecht auf der Außenwand 16 stehende Außenwandnormale 18 auf. Die an der Außenwandnormalen 18 angeordnete Pfeilspitze kennzeichnet eine von dem Innenraum 13 weg weisende Normalenrichtung 20 der Außenwandnormalen 18. Der Schaumkörper 12 umfasst ferner einen in der Normalenrichtung 20 über die Außenwand 16 vorstehenden Vorsprung 22. Der Innenraum 13 weist vorzugsweise eine an einer Vorderseite 24 des Gehäuses angeordnete Innenraumöffnung 26 auf. In der Darstellung der Fig. 1 ist der Innenraum 13 durch zwei Türen 14 verschlossen. Die Außenwand 16 ist vorzugsweise als eine der Innenraumöffnung 26 gegenüberliegend angeordnete Rückwand 28 des Schaumkörpers 12 ausgebildet.

Wie die Fig. 1 zeigt, weist das Gehäuse 10 einen, vorzugsweise vollständig, um die Außenwand 16 umlaufenden Außenwandrand 30 auf, der in der Normalenrichtung 20 derart über die Außenwand 16 überstehend angeordnet ist, dass der Außenwandrand 30 und die Außenwand 16 eine Außenwandkavität 32 ausbilden. Der Außenwandrand 30 kann die Außenwand 16 quer zu der Außenwandnormalen 20 begrenzen.

Der Vorsprung 22 ist derart an der Außenwand 16 angeordnet, dass der Vorsprung 22 die Außenwandkavität 32 in eine erste Kavität 34 und eine zweite Kavität 36 unterteilt. Vorzugsweise sind in der ersten Kavität 34 kältemittelführende und/oder - abgebende Komponenten des Klimaschranks anordenbar. Der Vorsprung 22 kann so die Abschottung der kältemittelführenden und/oder -abgebenden Komponenten ermöglichen, insbesondere von weiteren Komponenten des Klimaschranks, die vorzugsweise in der zweiten Kavität 36 anordenbar sind. Zur Anordnung von Anschlüssen der in der Außenwandkavität 32 angeordneten Komponenten kann der Schaumkörper 12 in der ersten Kavität 34 und/oder der zweiten Kavität 36 angeordnete Aussparungen 38 aufweisen.

Vorzugsweise ist der Schaumkörper 12 aus einem gasdichten Schaum gefertigt, sodass kann ein Durchtritt von Kältemittel durch den Schaumkörper 12, insbesondere durch den Vorsprung 22, und damit von der ersten Kavität 34 in die zweite Kavität 36 vermieden werden. Bevorzugt ist der Schaum als geschlossenporiger Schaum ausgebildet. Insbesondere die Darstellung in Fig. 3 veranschaulicht, dass der Schaumkörper 12 vorzugsweise als einteilig geschäumtes Bauteil ausgebildet ist. Der Schaumkörper 12 kann damit in einem einzigen Schäumvorgang hergestellt werden.

Die Fig. 3 u. 4 veranschaulichen, dass der Vorsprung 22 vorzugsweise ein erstes Vorsprungsende 40 sowie ein zweites Vorsprungsende 42 aufweist und als senkrecht zur Außenwandnormalen 18 von dem ersten Vorsprungsende 40 zu dem zweiten Vorsprungsende 42 verlaufende Rippe 44 ausgebildet. Vorzugsweise sind das erste Vorsprungende 40 und das zweite Vorsprungende 42 jeweils gasdicht anliegend an dem Außenwandrand 30 angeordnet. Das erste Vorsprungsende 40 und das zweite Vorsprungsende 42 können mittels einer gedachten, in der Rippe 44 verlaufende Verbindungslinie 46 verbunden sein. Bevorzugt weist die Verbindungslinie 46 einen L-förmigen Linienverlauf auf.

Wie die Fig. 3 u. 4 weiter zeigen, kann die Außenwand 16 eine rechteckige Grundfläche mit vier Außenwandkanten 48 und der Außenwandrand 30 kann mehrere Randabschnitte 50 aufweisen, wobei entlang jeder der Außenwandkanten 48 einer der Randabschnitte 50 angeordnet sein kann. Die einzelnen Randabschnitte 50 sind vorzugsweise gasdicht aneinander angrenzend angeordnet. Vorzugsweise sind die drei in Fig. 3 gezeigten Randabschnitte 50, nämlich zwei einander gegenüberliegend angeordnete seitlichen Randabschnitte 52 sowie ein rechtwinklig zu den beiden seitlichen Randabschnitten 52 angeordneter oberer Randabschnitt 54 durch den Schaumkörper 12 gebildet. Vorzugsweise ist das erste Vorsprungsende 40 anliegend an einen der seitlichen Randabschnitte 52 angeordnet.

Die Fig. 1 u. 2 zeigen, dass das Gehäuse 10 kann einen unter dem Schaumkörper 12 angeordneten Unterbau 56 aufweisen kann. Vorzugsweise ist ein dem oberen Randabschnitt 54 gegenüberliegend angeordneter unterer Randabschnitt 58 durch den Unterbau 56 gebildet. Der Unterbau 56 weist vorzugsweise ein Blechgehäuse auf. Das zweite Vorsprungsende 42 kann an anliegend an den unteren Randabschnitt 58 angeordnet sein.

Insbesondere die Fig. 3 veranschaulicht, dass der Vorsprung eine von der Außenwand 16 abgewandte Vorsprungstirnseite 60 und der Außenwandrand 30 eine von der Außenwand 16 abgewandte Randstirnseite 62 aufweisen kann, wobei die Vorsprungstirnseite 60 und die Randstirnseite 62 in einer gemeinsamen, senkrecht zu der Außenwandnormalen 18 angeordneten Ebene angeordnet sind.

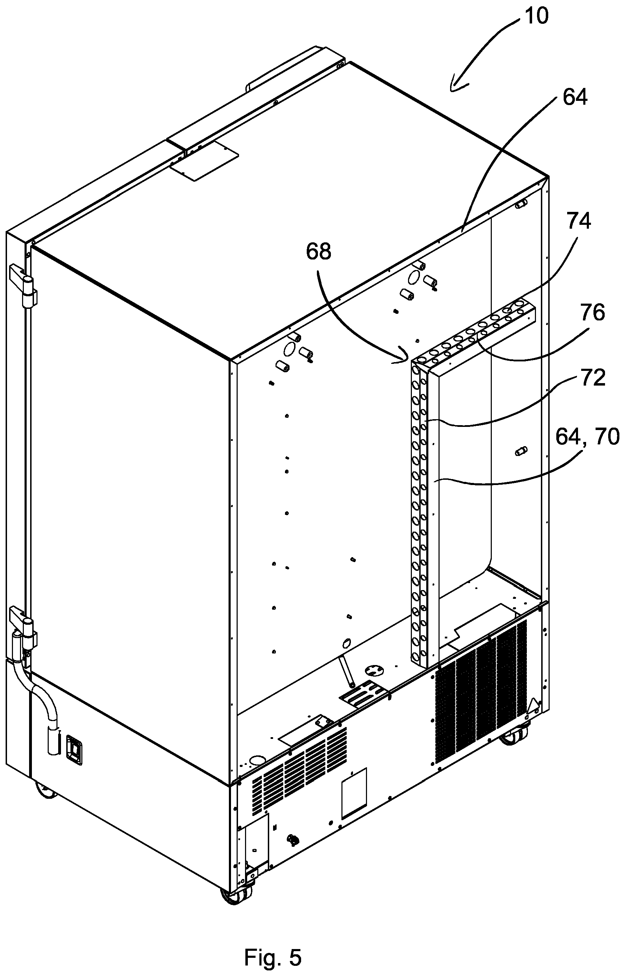

Die Fig. 5 u. 6 zeigen Ansichten des Gehäuses 10, bei denen der Schaumkörper 12 ausgeblendet, also nicht dargestellt ist. Dabei veranschaulichen die Fig. 5 u. 6, dass das Gehäuse 10 mehrere Befestigungselemente 64 zum Befestigen eines nicht dargestellten Gehäusedeckels des Gehäuses 10 aufweist. Die Befestigungselemente 64 sind als flächige Bauteile ausgebildet und, wie Fig. 1 zeigt, anliegend an der Vorsprungstirnseite 60 und der Randstirnseite 62 angeordnet. Die Befestigungselemente 64 können Befestigungsbohrungen 66 aufweisen. Bevorzugt ist der Gehäusedeckel dichtend an den Befestigungselementen 64 anordenbar. Der Gehäusedeckel kann außerdem dichtend an dem Außenwandrand 30 angeordnet sein.

Wie die Fig. 5 u. 6 zeigen, kann das Gehäuse 10 ein in dem Vorsprung 22 angeordnetes Strukturbauteil 68 aufweisen. Das Strukturbauteil 68 kann in den Schaumkörper 12 eingeschäumt sein. Das Strukturbauteil 68 kann insbesondere als Metalleinleger oder als Kunststoffeinleger ausgebildet sein.

Das Strukturbauteil 68 kann eine senkrecht zur Außenwandnormalen 18 angeordnete Bauteilstirnseite 70 und einen an der Bauteilstirnseite 70 angeordneten zur Außenwand 16 hin weisenden Bauteilschenkel 72 aufweisen. Der Bauteilschenkel 72 kann derart an der Bauteilstirnseite 70 angeordnet sein, dass das Strukturbauteil 68 einen L-förmigen Querschnitt aufweist. Dabei kann die Bauteilstirnseite 70 als das an der Vorsprungstirnseite 60 angeordnete der Befestigungselemente 64 ausgebildet sein. Der Bauteilschenkel 72 kann zur Verankerung des Strukturbauteils in dem Schaumkörper dienen.

Wie Fig. 5 zeigt, kann der Bauteilschenkel 72 eine Vielzahl an Durchbrüchen 74 aufweisen, in die der Schaumkörper 12 eingreifen kann. Die Durchbrüche 74 können als kreisrunde Bohrungen ausgebildet sein. Der Bauteilschenkel 72 kann darüber hinaus eine parallel zu der Bauteilstirnseite 70 verlaufende Biegung 76 aufweisen. Die Biegung 76 kann ebenfalls einer effektiven Verankerung des Strukturbauteils 68 in dem Schaumkörper 12 dienen.

### Bezugszeichenliste

- 10: Gehäuse
- 12: Schaumkörper
- 13: Innenraum
- 14: Tür
- 16: Außenwand
- 18: Außenwandnormale
- 20: Normalenrichtung
- 22: Vorsprung
- 24: Vorderseite
- 26: Innenraumöffnung
- 28: Rückwand
- 30: Außenwandrand
- 32: Außenwandkavität
- 34: erste Kavität
- 36: zweite Kavität
- 38: Aussparung
- 40: erstes Vorsprungsende
- 42: zweites Vorsprungsende
- 44: Rippe
- 46: Verbindungslinie
- 48: Außenwandkante
- 50: Randabschnitt
- 52: seitlicher Randabschnitt
- 54: oberer Randabschnitt
- 56: Unterbau
- 58: unterer Randabschnitt
- 60: Vorsprungstirnseite
- 62: Randstirnseite
- 64: Befestigungselement
- 66: Befestigungsbohrung
- 68: Strukturbauteil
- 70: Bauteilstirnseite
- 72: Bauteilschenkel
- 74: Durchbruch
- 76: Biegung

## Patentansprüche

1. Gehäuse (10) für einen Klimaschrank umfassend einen Schaumkörper (12) mit
• einem Innenraum (13) zur Aufnahme eines Klimaraumeinsatzes,
• einer Außenwand (16)
• einer gedachten, senkrecht auf der Außenwand (16) stehenden Außenwandnormalen (18), und
• einen in einer Normalenrichtung (20) der Außenwandnormalen (18) über die Außenwand (16) vorstehenden Vorsprung (22),
wobei das Gehäuse (10) einen um die Außenwand (16) zumindest abschnittsweise umlaufenden Außenwandrand (30) aufweist, der in der Normalenrichtung (20) derart über die Außenwand (16) überstehend angeordnet ist, dass der Außenwandrand (30) und die Außenwand (16) eine Außenwandkavität (32) ausbilden,
**dadurch gekennzeichnet, dass** der Vorsprung (22) derart an der Außenwand (16) angeordnet ist, dass der Vorsprung (22) die Außenwandkavität (32) in eine erste Kavität (34) und eine zweite Kavität (36) unterteilt.

2. Gehäuse nach Anspruch 1,
**dadurch gekennzeichnet, dass** der Schaumkörper (12) aus einem gasdichten Schaum gefertigt ist.

3. Gehäuse nach einem der vorhergehenden Ansprüche,
**dadurch gekennzeichnet, dass** der Schaumkörper (12) als einteilig geschäumtes Bauteil ausgebildet ist.

4. Gehäuse nach einem der vorhergehenden Ansprüche,
**dadurch gekennzeichnet, dass** der Vorsprung (22) ein erstes Vorsprungsende (40) sowie ein zweites Vorsprungsende (42) aufweist und als senkrecht zu der Außenwandnormalen (18) von dem ersten Vorsprungsende (40) zu dem zweiten Vorsprungsende (42) verlaufende Rippe (44) ausgebildet ist, wobei das erste Vorsprungende (40) und das zweite Vorsprungende (42) jeweils anliegend an dem Außenwandrand (30) angeordnet sind.

5. Gehäuse nach einem der vorhergehenden Ansprüche,
**dadurch gekennzeichnet, dass** die Außenwand (16) eine rechteckige Grundfläche mit vier Außenwandkanten (48) und der Außenwandrand (30) mehrere Randabschnitte (50) aufweist, wobei entlang jeder der Außenwandkanten (48) einer der Randabschnitte (50) angeordnet ist.

6. Gehäuse nach Anspruch 5,
**dadurch gekennzeichnet, dass** drei der Randabschnitte (50) durch den Schaumkörper (12) gebildet sind.

7. Gehäuse nach einem der Ansprüche 5 bis 6,
**dadurch gekennzeichnet, dass** das Gehäuse (10) einen unter dem Schaumkörper (12) angeordneten Unterbau (56) aufweist, wobei einer der Randabschnitte (50) durch den Unterbau (56) gebildet ist.

8. Gehäuse nach Anspruch 4 und einem der Ansprüche 5 bis 7, **dadurch gekennzeichnet, dass** das erste Vorsprungsende (40) anliegend an einen ersten Randabschnitt der Randabschnitte (50) und das zweite Vorsprungsende (42) anliegend an einen an den ersten Randabschnitt anliegenden zweiten Randabschnitt der Randabschnitte (50) angeordnet ist.

9. Gehäuse nach einem der vorhergehenden Ansprüche,
**dadurch gekennzeichnet, dass** der Vorsprung (22) eine von der Außenwand (16) abgewandte Vorsprungstirnseite (60) und der Außenwandrand (30) eine von der Außenwand (16) abgewandte Randstirnseite (62) aufweist, wobei die Vorsprungstirnseite (60) und die Randstirnseite (62) in einer gemeinsamen, senkrecht zu der Außenwandnormalen (18) angeordneten Ebene angeordnet sind.

10. Gehäuse nach einem der vorhergehenden Ansprüche,
**dadurch gekennzeichnet, dass** das Gehäuse (10) mindestens ein an dem Vorsprung (22) und/oder dem Außenwandrand (30) angeordnetes Befestigungselement (64) zum Befestigen eines Gehäusedeckels des Gehäuses (10) angeordnet ist.

11. Gehäuse nach Anspruch 10,
**dadurch gekennzeichnet, dass** der Gehäusedeckel dichtend an dem mindestens einen Befestigungselement (64) und/oder dem Vorsprung (22) anordenbar ist.

12. Gehäuse nach einem der vorhergehenden Ansprüche,
**dadurch gekennzeichnet, dass** das Gehäuse (10) ein in dem Vorsprung (22) angeordnetes Strukturbauteil (68) aufweist.

13. Gehäuse nach Anspruch 12,
**dadurch gekennzeichnet, dass** das Strukturbauteil (68) eine senkrecht zur Außenwandnormalen (18) angeordnete Bauteilstirnseite (70) und mindestens einen an der Bauteilstirnseite (70) angeordneten zur Außenwand (16) hin weisenden Bauteilschenkel (72) aufweist.

14. Gehäuse nach Anspruch 13,
**dadurch gekennzeichnet, dass** der mindestens eine Bauteilschenkel (72) eine Vielzahl an Durchbrüchen (74) aufweist.

15. Klimaschrank mit einem Gehäuse (10) nach einem der vor-
hergehenden Ansprüche.
